# EUROPEAN PATENT APPLICATION

(11) **EP 2 105 622 A2**
(43) Date of publication of application: **30.09.2009**
(21) Application number: 09004375.3
(22) Date of filing: 26.03.2009
(51) Int. Cl.: F16D 3/38, F16D 3/41

(54) **Cross shaft joint**

(30) Priority: 27.03.2008 JP 2008083779
(71) Applicant: JTEKT Corporation, Osaka-shi Osaka 542-8502 (JP)
(72) Inventor: Mizuno, Koichiro, Osaka-shi Osaka 542-8502 (JP)
(74) Representative: Hager, Thomas Johannes

(57) **Abstract**

A washer (30) is disposed between a lid part (18) of a cup (11) and an end surface of a shaft portion (15) of a cross-shaped shaft (10) so as to be relatively rotated with respect to the end surface of the shaft portion. The washer is provided with a projected portion (41) which is projected into a recess (33) formed on the end surface of the shaft portion. Blade portions (59,60) are formed on an outer surface of the projected portion. Grooves (57) which are extended from the projected portion outward in a radial direction are formed on an end surface of the washer only at a side of the projected portion in the axial direction.

## Description

The present invention relates to a cross shaft joint. More particularly, the invention relates to the cross shaft joint which is favorably used in a propeller shaft of an automobile.

Conventionally, as the cross shaft joint, there has been such an art as disclosed in Japanese Patent Publication No. JP-A-H11-125263.

This cross shaft joint includes a cross-shaped shaft, a cup in a bottomed cylindrical shape which is externally fitted to each of shaft portions of the cross-shaped shaft and has a cylindrical part and a lid part, a needle bearing, and a grease valve. The cross-shaped shaft has an oil feeding hole (a hole) which opens at an end surface thereof in an axial direction.

The aforesaid needle bearing is disposed between an outer peripheral surface of the cross-shaped shaft and an inner peripheral surface of the cylindrical part of the cup.

The aforesaid grease valve has a bottomed cylindrical part and a thrust washer part. The bottomed cylindrical part whose outer peripheral surface has a shape corresponding to an inner peripheral surface of the oil feeding hole is fitted into the oil feeding hole (the hole).

The aforesaid thrust washer part is continued to the bottomed cylindrical part, and disposedbetween the cylindrical part of the cup and the end surface of the cross-shaped shaft. Oil grooves are radially formed on an upper surface and a lower surface of the thrust washer part. The oil groove on the upper surface is communicated with an oil passing hole which is formed passing through the thrust washer from the lower surface to the upper surface.

In the conventional cross shaft joint having the above described structure, grease fed from an oiling port which is provided in a cross part of the cross-shaped shaft into the aforesaid oil feeding hole is liquidized with friction heat by rotation of a universal joint, and flows through a gap between an outer periphery of the bottomed cylindrical part of the grease valve and the oil feeding hole with a centrifugal force by the rotation of the universal joint. Thereafter, the grease passes the oil groove on the lower surface of the thrust washer, and moves to the needle bearing. In this manner, the needle bearing and the cup are lubricated with this grease which has moved.

Moreover, a part of the grease flowing through the oil groove on the lower surface of the thrust washer flows to the oil groove on the upper surface of the thrust washer through the oil passing hole, and moves between the thrust washer and the cup opposed to the thrust washer. In this manner, the thrust washer and the cup are lubricated with this grease which has moved.

In addition, the grease which is reserved between the cup and the thrust washer reliably falls into the bottomed cylindrical part of the grease valve to be reserved without leakage, when the rotation shaft is stopped, whereby holding performance of the grease is enhanced.

The inventor has found such phenomenon in the conventional cross shaft joint that the major part of the grease in the hole which opens at the end surface of the shaft portion of the cross-shaped shaft is not moved from the hole, and becomes meaningless as so-called dead grease in the hole.

### SUMMARY OF THE INVENTION

In view of the above, an object of the invention is to provide a cross shaft joint in which lubricant filled in.a hole which is formed at a center of an end surface of a shaft portion of a cross-shaped shaft can be efficiently moved to rolling elements where burning is most likely to occur, so that the rolling element canbe efficiently lubricated, and the lubricant can be efficiently utilized.

In order to solve the above described problems, there is provided, according to the invention, a cross shaft joint comprising:
a cross-shaped shaft,
a cup in a bottomed cylindrical shape which is externally fitted to each of shaft portions of the cross-shaped shaft, and has a cylindrical part and a lid part,
rolling elements disposed between an inner peripheral surface of the cylindrical part of the cup and an outer peripheral surface of the shaft portion, and
a washer in a disc-like shape which is positioned between the lid part of the cup and an end surface of the shaft, and can be relatively rotated with respect to the end surface of the shaft portion,
characterized in that the shaft portion has a hole at a center of the end surface,
the washer has a projected portion which is projected into the hole, and a groove which is extended outward in a radial direction from the projected portion, at a side opposed to the shaft portion and
the projected portion has a blade portion which is formed on an outer surface thereof.

A passage "extended outward in a radial direction" means that the groove is extended from the projected portion up to an outside of the washer in the radial direction, in a direction containing an extending component in the radial direction of the washer. Specifically, this includes not only a case where the groove is extended in a direction containing only a component in the radial direction of the washer, but also a case where the groove is extended in a direction containing both a component in the radial direction of the washer and a component in the circumferential direction of the washer.

Moreover, a passage "a washer in a disc-like shape which is positioned between the lid part of the cup and an end surface of the shaft .... " means that almost entire part of the washer is positioned between the lid part of the cup and the end surface of the shaft. Specifically, in the invention, a part of the washer need not be positioned between the lid part of the cup and the end surface of the shaft.

According to the invention, the washer can be relatively rotated with respect to the shaft portion, further, the washer has the projected portion which is projected into the recess positioned at the center of the end surface of the shaft portion at the side opposed to the shaft portion, and the groove which is extended from the projected portion outward in the radial direction, and the blade portion is formed on the outer surface of the projected portion. Therefore, the lubricant in the recess of the shaft portion can be agitated by the blade portion of the projected portion, and can be moved outward in the radial direction of the washer by a centrifugal force of the projected portion, and hence, the lubricant which has moved outward in the radial direction can be smoothly moved to the rolling elements which is positioned outside of the outer peripheral surface of the shaft portion in the radial direction through the groove which is extended in the radial direction. As the results, the lubricant which has been filled in the recess formed at the center of the end surface of the aforesaid shaft portion can be efficiently moved to a contact surface between the end surface of the shaft portion and the washer, and to the rolling elements where burning is most likely to occur. In this manner, the contact surface between the end surface of the shaft portion and the washer, and the rolling elements can be efficiently lubricated, and the lubricant can be efficiently utilized.

Moreover, in one embodiment, the aforesaid groove is provided on the washer only at the side opposed to the shaft portion.

According to the above described embodiment, because the aforesaid groove is provided on the washer only at the side opposed to the shaft portion, contact area of the washer with respect to the end surface of the shaft portion is smaller than contact area of the washer with respect to the lid part of the cup, and hence, frictional force between the washer and the end surface of the shaft portion can be made smaller than frictional force between the washer and the lid part of the cup. Accordingly, the aforesaid washer can be rotated in association with the cup which is making relative movement such as swing motion with respect to the shaft portion. Consequently, frequency of the relative rotation of the washer with respect to the shaft portion can be increased, and at the same time, velocity of the relative rotation of the washer with respect to the shaft portion canbe increased. As the results, lubricant agitating effect by the aforesaid blade portion can be enhanced.

Moreover, in one embodiment, the aforesaid blade portion has such a shape that a distance from the axial center of the washer is made larger, as the blade portion is extended from the distal end side of the projected portion to the lid part of the cup in the axial direction of the washer.

According to the above described embodiment, it is possible to smoothly and efficiently agitate the lubricant.

According to the cross shaft joint of the invention, the lubricant in the recess of the shaft portion of the cross-shaped shaft can be agitated by the blade portion of the projected portion of the washer, and can be moved outward in the radial direction of the washer by the centrifugal force of the projected portion, and hence, the lubricant which has moved outward in the radial direction can be smoothly moved to the rolling elements which is positioned outside of the outer peripheral surface of the shaft portion in the radial direction through the groove which is extended in the radial direction. As the results, the lubricant which has been filled in the recess formed at the center of the end surface of the aforesaid shaft portion can be efficiently moved to the contact surface between the end surface of the shaft portion and the washer, and to the rolling elements where burning is most likely to occur. In this manner, the contact surface between the end surface of the shaft portion and the washer, and the rolling elements can be efficiently lubricated, and the lubricant can be efficiently utilized.

### BRIEF DESCRIPTION OF THE DRAWINGS

Fig. 1 is a sectional view of an essential part of a cross shaft joint in an embodiment according to the invention, which is used in a propeller shaft.
Fig. 2 is an enlarged sectional view of an area surrounding one of shaft portions of a cross-shaped shaft.
Fig. 3 is a perspective view of a washer, as seen from outside of a projected portion in an axial direction of the washer.
Fig. 4 is a schematic plan view of the washer, as seen from outside of the projected portion in the axial direction of the washer.
Fig. 5 is a schematic plan view of a projected portion of a washer in a cross shaft joint in another embodiment, as seen from outside of the projected portion in the axial direction.

### DETAILED DESCRIPTION OF PREFERRED EMBODIMENTS

Now, the invention will be described in detail referring to an illustrated embodiment.

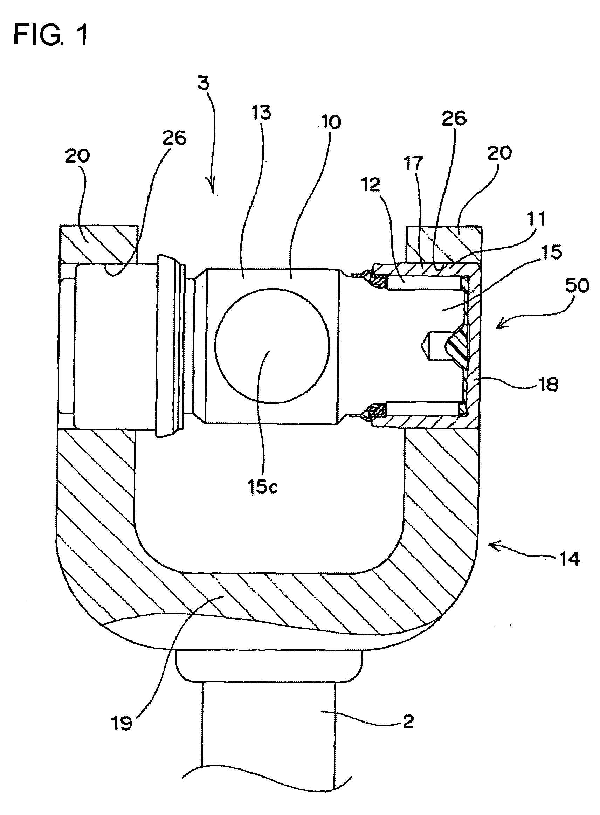

Fig. 1 is a sectional view of an essential part of a cross shaft joint 3 in an embodiment according to the invention which is used in a propeller shaft.

The cross shaft.joint 3 includes a cross-shaped shaft 10, four cups 11, a plurality of needles 12 as an example of rolling elements, and a pair of (two) yokes 14. It is to be noted that only one of the yokes 14 is shown in Fig. 1, for facilitating understanding, and the other yoke 14 is omitted.

The aforesaid cross-shaped shaft 10 has a body part 13, and four shaft portions 15 which are projected in four directions from peripheral side surfaces of the body part 13. The two shaft portions 15, 15 juxtaposed in a circumferential direction on the peripheral side surfaces of the aforesaid body part 13 are at an angle of substantially 90 degree with respect to each other. The aforesaid cross-shaped shaft 10 is formed of steel, and the body part 13 and the four shaft portions 15 are integrally formed by forging.

Each of the aforesaid cups 11 is formed of a steel plate by stamping or by casting. Each of the cups 11 has a cylindrical part 17 and a lid part 18, and covers each of the aforesaid shaft portions 15. Moreover, a plurality of the needles 12 are disposed between an outer peripheral surface of the shaft portion 15 and an inner peripheral surface of the cylindrical part 17 of the cup 11 keeping intervals between them in a circumferential direction of the shaft portion 15.

Each of the aforesaid yokes 14 is a member having a substantially U-shape in section, and formed of a steel plate or the like. Each of the yokes 14 has a cylindrical part 19 and two cup securing parts 20, and the cup securing parts 20 are extended from the cylindrical part 19 in an axial direction of the cylindrical part 19. Each of the cup securing parts 20 has a cup fitting hole 26 having a substantially cylindrical shape. In each of the aforesaid yokes 14, one of the cup securing parts 20 and the other cup securing part 20 are substantially parallel to each other. In each of the yokes 14, an axial center of the one cup fitting hole 26 and an axial center of the other cup fitting hole 26 are positioned on a substantially same rectilinear line.

In each of the aforesaid yokes 14, outer peripheral surfaces of the cylindrical parts 17 of the respective cups 11 are internally fitted and fixed to inner peripheral surfaces of the respective cup fitting holes 26. Moreover, a second shaft 2 is internally fitted and fixed to an inner peripheral surface of the cylindrical part 19 of the one of the yokes 14 which is shown in Fig. 1.

Although not particularly described, a shaft portion denoted by numeral 15c in Fig. 1 and another shaft portion (not shown) which is positioned on the same rectilinear line as this shaft portion 15c are fixed to the other yoke which is not shown, in the same manner as the above described manner.

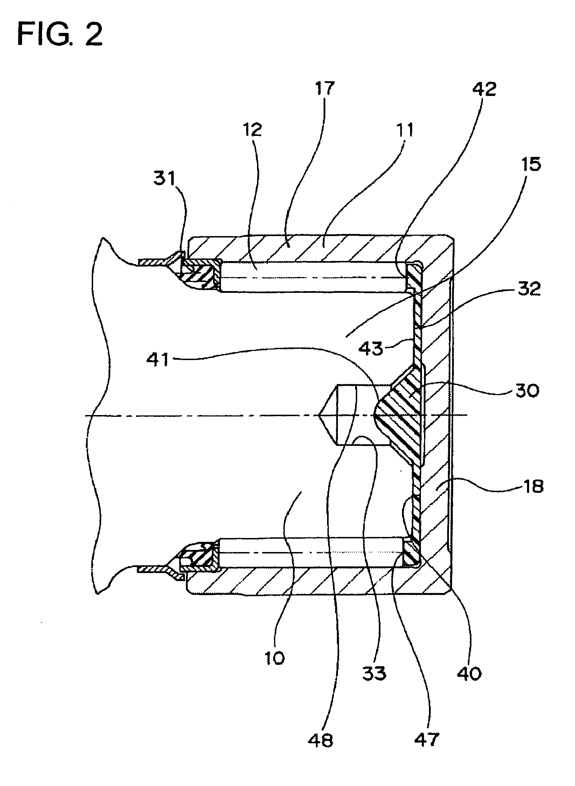

Fig. 2 is an enlarged sectional view showing an area surrounding one of the shaft portions 15 of the cross-shaped shaft 10, which is shown by an arrow mark 50 in Fig. 1.

As shown in Fig. 2, this cross shaft joint 3 includes a washer 30 in a disc-like shape formed of resin, and a seal member 31 in an annular shape, in addition to the aforesaid cross-shaped shaft 10, the cup 11, and a plurality of the needles 12.

Each of the shaft portions 15 of the aforesaidcross-shaped shaft 10 has a recess 33 as a hole on an end surface 32 thereof in an axial direction. The aforesaid recess 33 is a bottomed hole having a cylindrical inner peripheral surface 48. An axial center of the cylindrical inner peripheral surface 48 is substantially equal to an axial center of the shaft portion 15. Grease as an example of lubricant is enclosed in the aforesaid recess 33.

The aforesaid washer 30 is interposed between the lid part 18 of the cup 11 and the end surface 32 of the shaft portion 15. Specifically, the washer 30 has abasepart 40 in a disc-like shape, a projected portion 41, and a needle contact part 42 in an annular shape. The aforesaid projected portion 41 is projected in the axial direction from a center of an end surface 43 of the base part 40 at a side opposed to the shaft portion 15 in the axial direction, and the needle contact part 42 is projected in the axial direction from a disc-shaped end part in a radial direction of the end surface 43 of the base part 40.

The aforesaid projected portion 41 is projected into the recess 33 of the shaft portion 15, and contained in the recess 33. As shown in Fig. 2, an inner surface of an end part of the recess 33 at an open side has such a shape as corresponding to a shape of an outer surface of the projected portion 41.

An inner peripheral surface of the aforesaid needle contact part 42 is externally fitted to the outer peripheral surface of an end part in the axial direction of the shaft portion 15. An end surface 47 having an annular shape and spreading in a radial direction of the washer 30 is formed at a distal end of the needle contact part 42. The end surface 47 is butted against end surfaces of the needles 12 at one end in the axial direction, and guides the end surfaces of the needles 12 at the one end in the axial direction. The aforesaid washer 30 is disposed between the shaft portion 15 and the cup 11 in such a manner that the washer 30 can relatively rotate with respect to the end surface 32 of the shaft portion 15 in a circumferential direction of the shaft portion 15.

The aforesaid seal member 31 is fixed to the cup 11, and at the same time, adapted to slide along the outer peripheral surface of the shaft portion 15. The seal member 31 performs sealing action between an inner peripheral surface of an end part of the cylindrical part 17 of the cup 11 at an open side and the outer peripheral surface of the shaft portion 15. The seal member 31 restrains the grease which lubricates sliding parts of the needles 12 such as rolling surfaces from leaking to the exterior, and at the same time, restrains strange objects in the exterior from entering into a space in which the needles are disposed.

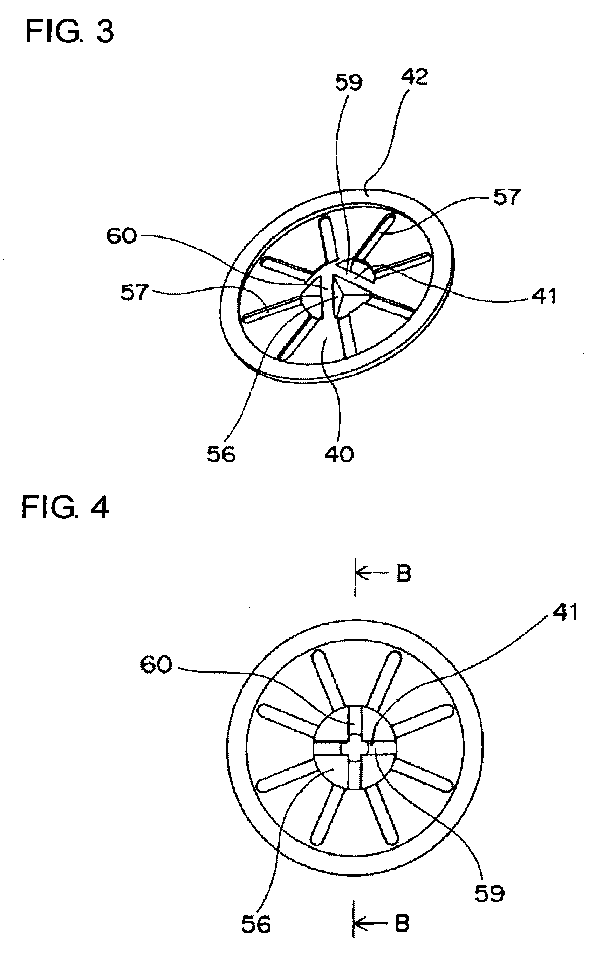

Fig. 3 is a perspective view of the aforesaid washer 30 as seen from outside of the projected portion 41 in the axial direction of the washer 30.

As shown in Fig. 3, the projected portion 41 of the aforesaid washer 30 has two blade portions 59, 60 extending in the radial direction of the washer 30. One of the blade portions 59 has the same shape and the same size as the other blade portion 60. Other parts of an outer surface of the aforesaid projected portion 41 except the two blade portions 59, 60 are formed as four dented areas 56. The four dented areas 56 have the same shape and the same size, and are arranged at equal intervals in the circumferential direction of the washer 30. Each of the dented areas 56 has a substantially regular tetrahedral shape.

A plurality of grooves 57 are formed on the end surface of the aforesaid washer 30 at the side of the projected portion 41, in a region positioned between the projected portion 41 and the needle contact part 42 in the radial direction of the washer 30, that is, on the surface of the base part 40 of the washer 30 at the side of the projected portion 41. The grooves 57 are extended from the projected portion 41 outward in the radial direction. Specifically, the grooves 57 are extended from the projected portion 41 up to the needle contact part 42 in the radial direction of the washer 30. A plurality of the grooves 57 are arranged at substantially equal intervals in the circumferential direction of the washer 30. The grooves 57 exist only on the end surface of the washer 30 at the side of the projected portion 41. An end surface of the washer 30 at the side opposed to the lid part 18 has a flat shape. The washer 30 is formed in such a shape that there is no concave part (including a groove) nor convex part on the end surface of the washer 30 at the side opposed to the lid part 18.

A distance of the aforesaid blade portions 59, 60 from an axial center of the washer 30 is made larger, as they are extended from a distal end side of the projected portion 41 (the center of the washer 30) toward the lid part 18 of the cup 11 in the axial direction of the washer 30.

Fig. 4 is a schematic plan view of the aforesaid washer 30 as seen from outside of the projected portion 41 in the axial direction of the washer 30.

As shown in Fig. 4, in the schematic plan view of the aforesaid washer 30 as seen from the outside of the projected portion 41 in the axial direction of the washer 30, one of the blade portions 59 and the other blade portion 60 which are formed on the projected portion 41 are substantially perpendicular to each other. Moreover, each of the aforesaid dented areas 56 has a sector shape. It is to be noted that a sectional shape of the washer 30 in Fig. 2 corresponds to a sectional view of the washer 30 taken along a cutting plane including a center of the one blade portion 59 in a lateral direction, that is, a sectional view taken along a line B-B in Fig. 4.

In the above described structure, the other yoke which is omitted in Fig. 1 is rotated in a circumferential direction of the cylindrical part of the other yoke by a rotation driving force of a first shaft (not shown) which is internally fitted and fixed to the other yoke. Then, in association with the rotation of the other yoke, the cross-shaped shaft 10 is rotated around its axial center (The cross-shaped shaft 10 is rotated in such a manner that the two axial centers of the cross-shaped shaft 10 may rotate on the same plane which is perpendicular to Fig. 1).

Then, the one of the yokes 14 which is shown in Fig. 1 is rotated with the above described rotation of the cross-shaped shaft 10, and the second shaft 2 which is fixed to the inner peripheral surface of the cylindrical part 19 of the one yoke 14 is rotated with this rotation of the one yoke 14. In this manner, the rotation driving force of the aforesaid first shaft is transmitted to the second shaft 2.

Moreover, the respective cups 11 can freely swing with respect to the respective shaft portions 15, and accordingly, the respective yokes 14 to which the cups 11 are respectively fixed can also freely swing with respect to the shaft portions 15. In this manner, the aforesaid first shaft and the second shaft 2 can be tilted with respect to the axial center of the cross-shaped shaft 10.

According to the cross shaft joint in the above described embodiment, the washer 30 can be relatively rotated with respect to the shaft portion 15, further, the washer 30 has the projected portion 41 which is projected into the recess 33 positioned at the center of the end surface 32 of the shaft portion 15 at the side opposed to the shaft portion 15, and the grooves 57 which are extended from the projected portion 41 outward in the radial direction, and the blade portions 59, 60 are formed on the outer surface of the projected portion 41. Therefore, the grease in the recess 33 of the shaft portion 15 can be agitated by the blade portions 59, 60 of the projected portion 41, and can be moved outward in the radial direction of the washer 30 by a centrifugal force of the projected portion 41, and hence, the grease which has moved outward in the radial direction can be smoothly moved to the needles 12 which are positioned outside of the outer peripheral surface of the shaft portion 15 in the radial direction through the grooves 57 which are extended in the radial direction. As the results, the grease which has been filled in the recess 33 formed at the center of the end surface 32 of the aforesaid shaft portion 15 can be efficiently moved to a contact surface between the end surface 32 of the shaft portion 15 and the washer 30, and to the needles 12 where burning is most likely to occur. In this manner, the contact surface between the end surface 32 of the shaft portion 15 and the washer 30, and the needles 12 can be efficiently lubricated, and the grease can be efficiently utilized.

Moreover, according to the cross shaft joint in the above described embodiment, because the aforesaid grooves 57 are provided on the washer 30 only at the side opposed to the shaft portion 15, contact area of the washer 30 with respect to the end surface 32 of the shaft portion 15 is smaller than contact area of the washer 30 with respect to the lid part 18 of the cup 11, and hence, frictional force between the washer 30 and the end surface 32 of the shaft portion 15 can be made smaller than frictional force between the washer 30 and the lid part 18 of the cup 11. Accordingly, the aforesaid washer 30 can be rotated in association with the cup 11 which is making relative movement such as swing motion with respect to the shaft portion 15. Consequently, frequency of the relative rotation of the washer 30 with respect to the shaft portion 15 can be increased, and at the same time, velocity of the relative rotation of the washer 30 with respect to the shaft portion 15 can be increased. As the results, grease agitating effects by the aforesaid blade portions 59, 60 can be enhanced.

Moreover, according to the cross shaft joint in the above described embodiment, because the outer surface of the projected portion 41 has the blade portions 59, 60 whose distance from the axial center of the washer 30 is made larger, as they are extended from the distal end side of the projected portion 41 to the lid part 18 of the cup 11 in the axial direction of the washer 30, it is possible to smoothly and efficiently agitate the grease.

Although in the cross shaft joint in the above described embodiment, the recess 33 as the hole formed in the shaft portion 15 is a bottomed hole and has a bottom, the hole formed in the shaft portion 15 need not be provided with the bottom, in this invention. For example, in this invention, the hole formed in the shaft portion of the cross-shaped shaft may be an oil feeding hole communicated with a grease nipple.

Moreover, in the cross shaft joint in the above described embodiment, the eight grooves 57 which are extended in the radial direction are formed on the surface of the base part 40 of the washer 30 at the side opposed to the shaft portion 15 at the equal intervals in the circumferential direction. However, in this invention, one to seven grooves which are extended in the radial direction may be formed on the surface of the base part of the washer (a region of the surface of the washer at the side of the projected portion except the projected portion and the rolling element contact part (in case where it exists)) at the side opposed to the shaft portion. Alternatively, more than nine grooves may be formed. Further, in this invention, it is possible to form grooves which are extended in an extending direction containing both a component in the radial direction and a component in the circumferential direction of the washer, on the surface of the base part of the washer at the side opposed to the shaft portion. Still further, in this invention, it is possible to form a plurality of grooves on the surface of the base part of the washer at the side opposed to the shaft portion, at unequal intervals in the circumferential direction. Still further, in this invention, it is possible to form grooves on a surface of the washer at the side opposed to the lid part of the cup.

Moreover, in the cross shaft joint in the above described embodiment, the washer 30 has the needle contact part 42 which is projected from the base part 40, at the annular end part thereof outward in the radial direction. However, in this invention, the end part of the washer outward in the radial direction need not be projected from the base part. In short, a part corresponding to the needle contact part 42 need not be provided.

Moreover, in the cross shaft joint in the above described embodiment, the needles 12 are disposed between the outer peripheral surface of the shaft portion 15 and the inner peripheral surface of the cylindrical part 17 of the cup 11. However, in this invention, rolling elements other than the needles, such as cylindrical rollers, may be disposed between the outer peripheral surface of the shaft portion and the inner peripheral surface of the cylindrical part of the cup.

Moreover, in the cross shaft joint in the above described embodiment, there are formed the blade portions 59, 60 in the rectilinear shape in the schematic plan view when the washer 30 is seen from outside of the projected portion 41 in the axial direction of the washer 30. However, in this invention, the shape of the blade portions which are formed on the projected portion need not be rectilinear, in the schematic plan view when the washer is seen from outside of the projected portion in the axial direction of the washer.

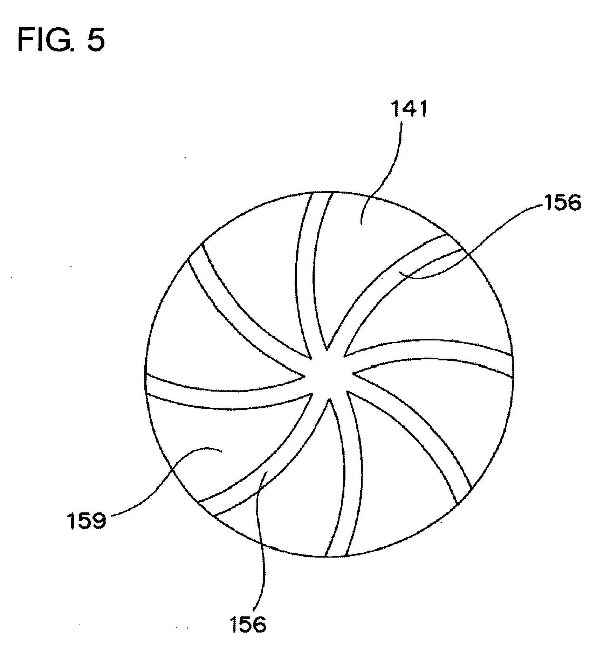

For example, the blade portions may have such a shape as shown in Fig. 5.

Fig. 5 is a schematic plan view of a projected portion 141 of a washer in a cross shaft joint in another embodiment, as seen from outside of the projected portion 141 in the axial direction.

In Fig. 5, when a substantially parabolic curve whose center is positioned on a point on an axial center of the projected portion 141 is rotated around the axial center, the parabolic curve draws a surface. Numeral 159 denotes surface parts composed of a part of the surface. Numeral 156 denotes blade portions which are projected from the surface drawn by the parabolic curve, in the axial direction of the projectedportion 141.

The eight surface parts 159 are formed on the projected portion 141 separately in the circumferential direction. The eight surface parts 159 have the same shape, and arranged at equal intervals in the circumferential direction.

Moreover, the eight blade portions 156 are formed separately in the circumferential direction. In the schematic plan view in Fig. 5, each of the blade portions 156 has a substantially circular shape. The eight blade portions 156 have the same shape, and arranged at equal intervals in the circumferential direction.

It is needless to say that the shape of the blade portions which are formed in the projected portion in this invention is not limited to the shapes as shown in Figs. 3 and 5. In this invention, the blade portions which are formed in the projected portion may have any shape, provided that the blade portions have such a shape that the lubricant in the recess of the shaft portion can be agitated.

## Claims

1. A cross shaft joint comprising:
a cross-shaped shaft which includes a shaft portion having a hole at a center of an end surface of the shaft portion;
a cup in a bottomed cylindrical shape, which is externally fitted to the shaft portion and includes a cylindrical part and a lid part;
rolling elements disposed between an inner peripheral surface of the cylindrical part and an outer peripheral surface of the shaft portion; and
a disc-shaped washer which is positioned between the lid part and the end surface of the shaft portion, is relatively rotatable with respect to the end surface of the shaft portion, and includes, at a side opposed to the shaft portion, a projected portion which is projected into the hole and a groove which is extended from the projected portion outward in a radial direction,
wherein the projected portion includes a blade portion which is formed on an outer surface thereof.

2. The cross shaft joint according to claim 1, wherein an end surface of the washer at a side opposed to the lid part is flat.

3. The cross shaft joint according to claim 1, wherein a plurality of the grooves are extended from the projectedportion outward in the radial direction at equal intervals in a circumferential direction of the washer.
